# EUROPÄISCHE PATENTSCHRIFT

(11) **EP 0 883 340 B1**
(45) Veröffentlichungstag und Bekanntmachung des Hinweises auf die Patenterteilung: **14.08.2002**
(21) Anmeldenummer: 97903296.8
(22) Anmeldetag: 17.02.1997
(51) Int. Cl.: A01N 25/34, A01N 25/00, A01N 57/20

(54) **HERBIZIDIMPLANTATE FÜR PFLANZEN**
HERBICIDE IMPLANTS FOR PLANTS
IMPLANTS HERBICIDES POUR PLANTES

(30) Priorität: 01.03.1996 DE 19607850; 01.03.1996 DE 19607849
(43) Veröffentlichungstag der Anmeldung: 16.12.1998
(73) Patentinhaber: BAYER AG, 51368 Leverkusen (DE)
(72) Erfinder: PRIESNITZ, Uwe, D-42657 Solingen (DE); HÖLTERS, Jürgen, D-51375 Leverkusen (DE); PENNERS, Gunther, D-41470 Neuss (DE); REHBOLD, Bodo, D-50858 Köln (DE); RIEBEL, Hans-Jochem, D-42113 Wuppertal (DE)
(86) Internationale Anmeldenummer: EP9700727
(87) Internationale Veröffentlichungsnummer: WO9731528

(56) Entgegenhaltungen:
- EP-A- 0 564 945
- EP-A- 0 741 969
- WO-A-91/03940
- WO-A-93/14623
- GB-A- 2 080 687
- US-A- 3 799 758
- US-A- 5 340 578
- US-A- 5 408 781
- DATABASE WPI Section Ch, Week 8551 Derwent Publications Ltd., London, GB; Class C03, AN 85-320770 XP002031472 & JP 60 224 601 A (DOW CHEM NIPPON KK) , 9.November 1985
- CHEMICAL ABSTRACTS, vol. 92, no. 11, 17.März 1980 Columbus, Ohio, US; abstract no. 89200, K.J.HAN: "Some arboricide investigations on oil palms" XP002031470 & PLANTER, Bd. 55, 1979, Seiten 371-376,
- DATABASE CROPU STN-International STN-accession no. 97-82206, D.SCHOLZ: "Chemical thinning in forestry - an alternative to motor-manual procedures." XP002031471 & NACHRICHTENBL.DTSCH.PFLANZENSCHUTZDIENSTES , Bd. 49, Nr. 2, 1997, Seiten 21-23,

## Beschreibung

Die Erfindung betrifft neue Pflanzenbehandlungsmittel auf Basis von systemischen Herbiziden, welche in feste geformte Körper eingearbeitet in die Zielpflanzen implantiert werden können, Verfahren zu deren Herstellung sowie Verfahren zur Behandlung. von Einzelpflanzen mit in feste geformte Körper eingearbeiteten systemischen Herbiziden, die in dieser Form in die Saftleitungsbahnen der Pflanzen eingebracht werden, wodurch insbesondere Bäume wie auch andere unerwünschte Pflanzen abgetötet werden können.

Es ist bereits bekannt, daß Lösungen von bestimmten Schädlingsbekämpfungsmitteln oder "Pestiziden" (insbesondere von Insektiziden) durch sogenannte "trunk implantation" in Bäume eingebracht werden können (vgl. J. Econ. Entomol 61 (1968), 778-783; loc. cit. 64 (1971), 1295-1298; loc. cit. 72 (1979), 51-54; loc. cit. 81 (1988), 1668-1671; US 4342176).

Es ist auch bekannt, daß derartige Wirkstoffe in feste Formkörper eingearbeitet zur Schädlingsbekämpfung an bestimmten Pflanzen, insbesondere an Bäumen, verwendet werden können (vgl. EP 564945, JP 58039602 - zitiert in Chem. Abstracts 98: 193401).

Weiter ist eine Vorrichtung zur transcuticularen Applikation von Wirkstoffen an Pflanzen in Form eines den Wirkstoff speichernden Wirkstoffträgers bekannt (vgl. EP 254196). Dieser Wirkstoffträger befindet sich jedoch bei der Anwendung an der Pflanzenoberfläche und nicht im Innern der Pflanze.

Ferner ist eine Methode bzw. Vorrichtung zur Anwendung von Herbiziden an Bäumen bekannt, bei welcher der Wirkstoff über eine Art Lochstanze ("punch hammer") in den Baum eingeführt wird (vgl. US 5086584). Diese Applikationsmethode ist jedoch relativ komplex; es bestand daher Bedarf für eine einfachere Anwendungsform zur Abtötung unerwünschter Bäume und anderer Pflanzen.

Weiterhin werden Herbizide im allgemeinen formuliert, d.h. mit bestimmten Zuschlagstoffen kombiniert, mit Hilfe mechanischer Ausbringungsgeräte - meist Spritzgeräte - zur Abtötung von unerwünschten Pflanzen eingesetzt.

Die Aufgabe, unerwünschte Bäume und Sträucher aus Waldbeständen oder aus Garten- und Parkanlagen zu entfernen, gewinnt derzeit eine immer stärker werdende Bedeutung. Die Lösung dieser Aufgabe ist mit mechanischen Mitteln praktisch nur kleinflächig möglich und dies auch nur mit großem personellem, finanziellem und technischem Aufwand. Der Einsatz von Herbiziden über Spritzapplikation ist zwar technisch möglich, unter Umweltaspekten jedoch unbefriedigend.

In der JP-A 60 - 224 601 werden flächige Gebilde aus Trägermaterial und herbizidem Wirkstoff offenbart, die in Einschnitte an der Oberfläche von Bäumen eingesetzt werden können. Diese Präparate enthalten den Wirkstoff aber nicht in homogener Verteilung, sondern nur an der Oberfläche. Außerdem sind diese Trägermaterialien nicht im Pflanzensaft löslich.

Die WO 91 - 03 940 betrifft nur Matrices auf Basis von Stärke-Produkten. Es werden weder Implantate erwähnt, noch wird eine Stammbehandlung beschrieben. im übrigen sind die Matrices zwar biologisch abbaubar, aber nicht im Pflanzensaft löslich.

Aus der WO 93 - 14 623 sind schließlich Kunststoffkapseln bekannt, die mit Agrochemikalien gefüllt werden können und sich in Bohrlöcher in Bäumen einsetzen lassen. Eine homogene Verteilung des Wirkstoffes in der gesamten Kapsel ist hier jedoch nicht gegeben.

Die vorliegende Erfindung betrifft feste geformte Pflanzenbehandlungsmittel, die
- ein systemisches Herbizid aus der Gruppe bestehend aus Bialaphos, Glufosinate, Glyphosate oder ein Salz davon enthalten, wobei das Herbizid homogen verteilt ist in
- einem polymeren Trägermaterial, das im Pflanzensaft löslich ist, wobei das Trägermaterial ein Polyethylenoxid, ein Copolymer aus N-Vinylpyrrolidon und Vinylacetat oder ein Gemisch aus Polyvinylalkohol und Glycerin ist.

Gegenstand der Erfindung ist weiterhin ein Verfahren zur Herstellung von festen geformten Pflanzenbehandlungsmitteln, welches darin besteht, daß man
- ein systemisches Herbizid aus der Gruppe bestehend aus Bialaphos, Glufosinate, Glyphosate oder einem Salz davon homogen vermischt mit einem polymeren Trägermaterial, das im Pflanzensaft löslich ist, wobei das Trägermaterial ein Polyethylenoxid, ein Copolymer aus N-Vinylpyrrolidon und Vinylacetat oder ein Gemisch aus Polyvinylalkohol und Glycerin ist,
- auf eine Temperatur bis zu 130° C erwärmt und
- das entstehende Gemisch dann durch Extrudierung in Formkörper überführt.

Gefunden wurde anßerdem ein Verfahren zur Behandlung von Einzelpflanzen mit systemischen Herbiziden, welches darin besteht, daß man oben bezeichnete, feste geformte Pflanzenbehandlungsmittel in den Bereich der Saftleitungsbahnen der abzutötenden Pflanzen einbringt.

Überraschenderweise können nach dem erfindungsgemäßen Behandlungsverfahren unerwünschte Bäume und Sträucher auf sehr einfache Weise beseitigt werden. Die erfindungsgemäßen Pflanzenbehandlungsmittel können in kleine, mit üblichen Handbohrern erzeugte Löcher in den Zielpflanzen eingelegt oder "implantiert" bzw. "eingepfropft" werden. Das erfindungsgemäße Behandlungsverfahren zeichnet sich durch besonders einfache Handhabung - teure "Spezialgeräte" werden nicht benötigt - und durch die gezielte Anwendung der Wirkstoffe an den Orten, an denen ihre Wirkung erwünscht ist, unter Vermeidung unerwünschter Kontamination der Umgebung, aus. Angesichts der sonst üblichen Praxis bei der Anwendung von Herbiziden stellt die nun gefundene neue Anwendungsmöglichkeit unter ökonomischen wie auch unter ökologischen Aspekten eine wertvolle Bereicherung des Standes der Technik dar.

Die Erfindung betrifft Herbizide enthaltende feste geformte Pflanzenbehandlungsmittel, bei denen die Wirkstoffe aus der nachstehenden Stoffgruppe (bezeichnet mit den rationellen Namen sowie gegebenenfalls den "common names") ausgewählt sind:
- γ-(Hydroxymethylphosphinyl)-L-α-aminobutyryl-L-alanyl-L-alanin ("Bialaphos");
- 2-Amino-4-(hydroxymethylphosphinyl)-Buttersäure ("Glufosinate");
- N-Phosphonomethyl-glycin ("Glyphosate").

Neben diesen "reinen Wirkstoffen" können auch anwendungsübliche Salze dieser Verbindungen, wie z.B. Natrium-, Kalium-, Ammonium-, Methylammonium-, Ethylammonium-, n- oder i-Propylammonium-, n-, i-, s- oder t-Butylammonium-, Cyclopentylammonium-, Cyclohexylammonium-, Dimethylammonium-, Diethylammonium-, Di-n-propylammonium-, Di-i-propylammonium-, Dibutylammonium-, Dicyclopentylammonium- und Dicyclohexylammonium-Salze sowie Trimethylsulfonium- und Triethylsulfonium-Salze in den erfindungsgemäßen Pflanzenbehandlungsmitteln verwendet werden. Als Beispiel für ein derartiges Salz sei das Trimethylsulfonium-Salz des N-Phosphonomethyl-glycins (common name: "Sulfosate") genannt.

Erfindungsgemäß wird das Implantat in innigen Kontakt mit der Zielpflanze gebracht, sodaß der enthaltene Wirkstoff über den Saftstrom in die Pflanze gelangt und dort über den Stoffwechsel in der Pflanze verteilt wird.

Die erfindungsgemäßen Implantate bestehen vorzugsweise aus dem reinen Wirkstoff und einem geeigneten Bindemittel für die Formgebung.

Überraschenderweise können die reinen Wirkstoffe in fester Form mit geringen Mengen Bindemittel ohne die Kombination mit den sonst üblichen Formulierhilfsstoffen und ohne die Verwendung spezieller Applikatoren und/oder Dispenser unmittelbar zur Abtötung unerwünschter Pflanzen eingesetzt werden.

Geeignete Polymere zur Ausbildung des Wirkstoffträgers sind Polyethylenoxid, ein Copolymer aus N-Vinylpyrrolidon und Vinylacetat oder ein Gemisch aus Polyvinylalkohol und Glycerin.

In den Formkörpern können noch weitere Bestandteile, wie Stabilisierungsmittel, Schmiermittel, Füllstoffe und Färbematerialien, enthalten sein, ohne daß dadurch die grundlegenden Eigenschaften der Zusammensetzung verändert werden. Geeignete Stabilisierungsmittel sind Antioxidantien und Mittel, die den Formkörper vor ultravioletter Strahiung und unerwünschtern Abbau während der Bearbeitung (wie Strangpressen) schützen. Einige Stabilisierungsmittel wie epoxidierte Sojabohnenöle dienen außerdem als sekundäre Weichmacher. Als Schmiermittel können beispielsweise Stearate, Stearinsäure und Polyethylen mit niedrigem Molekulargewicht verwendet werden. Diese Beständteile können in einer Konzentration bis zu etwa 20 Gewichtsprozent der. gesamten Zusammensetzung verwendet werden.

In den polymeren Bindemitteln oder Trägermaterialien gegebenenfalls enthaltene Füllstoffe und/oder Additive sind bekannte, praxisübliche Füllstoffe/Additive oder Fasern auf anorganischer oder organischer Basis, Färbemittel wie Farbstoffe und Buntpigmente, Wasserbindemittel, oberflächenaktive Substanzen oder Mittel zu pH-Stabilisierung.

Als anorganische Füllstoffe seien Baryt, Titandioxid, Quarzsand, Fällungskieselsäuren, Kaolin, Ruß und Glas(mikro)perlen, als organische Füllstoffe Pulver auf Basis von Polystyrol oder PVC genannt.

Geeignete Fasern sind beispielsweise Glasfasern von 0,1 mm bis 1 mm Länge oder organische Fasern wie Polyester- oder Polyamid-fasern.

Zur Erzielung einer Anfärbung des Bindemittels oder Trägermaterials können übliche Farbstoffe oder Buntpigmente auf anorganischer oder organischer Basis verwendet werden, beispielsweise Eisenoxid- oder Chromoxid-Pigmente, wie auch Phthalocyanin- oder Azofarbstoff-pigmente.

Bevorzugte Wasserbindemittel, welche gegebenenfalls in die Trägermaterialien/-Bindemittel eingearbeitet werden, sind Zeolithe.

Geeignete oberflächenaktive Mittel sind beispielsweise Cellulosepulver, Aktivkohle und Kieselgele.

Zur Herstellung der erfindungsgemäßen Bindemittel/Trägermaterialien/Formkörper/Implantate können die einzelnen Komponenten nach üblichen Mischverfahren trocken vermischt und nach üblichen Formungsverfahren, wie beispielsweise Extrusion/Strangpressen oder Formguß (injection moulding) in geeignete Formen gebracht werden.

Es ist auch möglich, die einzelnen Komponenten in geeigneten Lösungsmitteln zu lösen und aus der Lösung heraus nach üblichen Methoden zu "verspinnen".

Die endungsgemäßen festen geformten Pflanzenbehandlungsmittel sind zur Applikation dosierter Wirkstoffmengen bei Pflanzen praktisch aller Gattungen, insbesondere im Haus- und Gartenbereich, in Parkanlagen und im Forst geeignet.

Das erfindungsgemäße Verfahren eignet sich zur Behandlung von Einzelpflanzen, vorzugsweise von krautigen Pflanzen, ein- oder mehrjährigen Sträuchern, sowie von Gehölzen, wie Büschen und Bäumen.

Die Herstellung und die Verwendung der erfindungsgemäßen Pflanzenbehandlungsmittel sind im folgenden beispielhaft beschrieben.

### Herstellungsbeispiele/Formulierungsbeispiele:

### Beispiel 1

Zur Herstellung erfindungsgemäßer wirkstoffhaltiger Formkörper werden 50 Gewichtsteile Glyphosate und 50 Gewichtsteile des polymeren Trägermaterials Polyethylenoxid WSR N 80 über Differentialwaagen getrennt in die Einzugszone eines Doppelschneckenextruders vom Typ ZSK 32 (Werner & Pleiderer) eindosiert. Die Komponenten werden im Extruder innerhalb von 4 Minuten bei 100°C bis 130°C homogenisiert, die Schmelze bei einem Durchsatz von 1,8 kg/h extrudiert, mit Luft gekühlt und granuliert. Nach der Granulierung wird die wirkstoffhaltige Formmasse mit Hilfe einer Presse bei 120°C zu Stäben, Stiften, Streifen oder Platten verformt.

### Beispiel 2

Analog Beispiel 1 werden 50 Gewichtsteile Glufosinate und 50 Gewichtsteile des polymeren Trägermaterials Polyethylenoxid WSR N 80 extrudiert und zu Formkörpern verarbeitet.

### Beispiel 3

Analog Beispiel 1 werden 50 Gewichtsteile Sulfosate und 50 Gewichtsteile des polymeren Trägermaterials Polyethylenoxid WSR N 80 extrudiert und zu Formkörpern verarbeitet.

### Beispiel 4

Analog Beispiel 1 werden 50 Gewichtsteile Bialaphos und 50 Gewichtsteile des polymeren Trägermaterials Polyethylenoxid WSR N 80 extrudiert und zu Formkörpern verarbeitet.

### Beispiel 5

Analog Beispiel 1 werden 50 Gewichtsteile Glufosinate und 50 Gewichtsteile eines Copolymeren aus N-Vinyl-pyrrolidon und Vinylacetat (Luviskol VA 64) bei 80°C bis 130°C extrudiert und zu Formkörpern verarbeitet.

### Beispiel 6

Eine Mischung aus 255 Gewichtsteilen Polyvinylalkohol Mowiol 4-88 und 45 Gewichtsteilen Glycerin wird in einem Kneter vom Typ Haake Rheomix bei 130°C und 50 Upm aufgeschmolzen und anschließend werden 100 Gewichtsteile Sulfosate dazu gegeben. Zur Homogenisierung wird dann der Ansatz 15 Minuten lang durchgeknetet. Die erhaltene Masse wird in einer Presse bei 200 bar/120°C zu Platten mit 100 cm² Fläche und 2 mm Dicke verarbeitet.

### Anwendungsbeipiele:

### Beispiel A

Es werden Testpflanzen (Birken; Holunder) einer Höhe von 3 m bis 6 m und einem Stammumfang von 5 cm bis 30 cm behandelt. Die erfindungsgemäßen Formkörper ("Implantate") werden in vorgebohrte Löcher (Durchmesser ca. 6 mm, Tiefe ca. 16 mm) bündig eingesetzt, wobei 1 Implantat (ca. 0,5 g enthaltend ca. 0,30 g Wirkstoff) pro cm Stammumfang verwendet wird.

Nach 4 Wochen wird der Schädigungsgrad der Pflanzen bonitiert (% der Schädigung im Vergleich zur unbehandelten Kontrolle).

In diesem Test zeigt beispielsweise die gemäß obiger Beschreibung angewandte Verbindung N-Phosphonomethyl-glycin-i-propylaminsalz eine komplette Abtötung der Testpflanzen.

### Beispiel B

Es werden Testpflanzen (Birken, Holunder) einer Höhe von 3 m bis 6 m und einem Stammumfang von 5 cm bis 30 cm behandelt. Die erfindungsgemäßen Formkörper ("Implantate") werden in vorgebohrte Löcher (Durchmesser ca. 6 mm, Tiefe ca. 16 mm) bündig eingesetzt, wobei 1 Implantat (ca. 0,5 g enthaltend ca. 0,30 g Wirkstoff) pro cm Stammumfang verwendet wird.

Nach 4 Wochen wird der Schädigungsgrad der Pflanzen bonitiert (% der Schädigung im Vergleich zur unbehandelten Kontrolle).

In diesem Test zeigt beispielsweise die gemäß obiger Beschreibung angewandte Verbindung N-Phosphonomethyl-gylcinethylester eine komplette Abtötung der Testpflanzen.

## Patentansprüche

1. Feste geformte Pflanzenbehandlungsmittel, **darurch gekennzeichnet, daß** sie
- ein systemisches Herbizid aus der Gruppe bestehend aus Bialaphos, Glufosinate, Glyphosate oder ein Salz davon enthalten, wobei das Herbizid homogen verteilt ist in
- einem Polymeren Trägermaterial, das im Pflanzensaft löslich ist, wobei das Trägermaterial ein Polyethylenoxid, ein Copolymer aus N-Vinylpyrrolidon und Vinylacetat oder ein Gemisch aus Polyvinylalkohol und Glycerin ist.

2. Verfahren zur Herstellung von festen geformten Pflanzenbehandlungsmitteln gemäß Anspruch 1, **dadurch gekennzeichnet, daß** man
- ein systemisches Herbizid aus der Gruppe bestehend aus Bialaphos, Glufosinate, Glyphosate oder einem Salz davon homogen vermischt mit einem polymeren Trägermaterial, das im Pflanzensaft löslich ist, wobei das Trägermaterial ein Polyethylenoxid, ein Copolymer aus N-Vinylpyrrolidon und Vinylacetat oder ein Gemisch aus Polyvinylalkohol und Glycerin ist,
- auf eine Temperatur bis zu 130° C erwärmt und
- das entstehende Gemisch dann durch Extrudierung in Formkörper überführt.

3. Verfahren zur Behandlung von Einzelpflanzen mit systemischen Herbiziden, **dadurch gekennzeichnet, daß** man feste geformte Pflanzenbehandlungsmittel gemäß Anspruch 1 in den Bereich der Saftleitungsbahnen der abzutötenden Pflanzen einbringt.

4. Pflanzenbehandlungsmittel nach Anspruch 1, **dadurch gekennzeichnet, daß** sie zwischen 10 % und 90 %, vorzugsweise zwischen 50 % und 75 %, Herbizid-Wirkstoff sowie zwischen 90 % und 10 %, vorzugsweise zwischen 50 % und 25 %, Trägermaterial enthalten.

5. Pflanzenbehandlungsmittel gemäß Anspruch 1, **dadurch gekennzeichnet, daß** es als Implantat in Stabform vorliegt.

## Claims

1. Solid shaped plant treatment compositions, **characterized in that** they
- contain a systemic herbicide from the group consisting of bialaphos, glufosinate, glyphosate or a salt thereof, the herbicide being homogeneously distributed in
- a polymeric carrier material which is soluble in plant sap, the carrier material being a polyethylene oxide, an N-vinylpyrrolidone/vinyl acetate copolymer, or a mixture of polyvinyl alcohol and glycerol.

2. Process for the preparation of solid shaped plant treatment compositions according to Claim 1, **characterized in that**
- a systemic herbicide from the group consisting of bialaphos, glufosinate, glyphosate or a salt thereof is mixed homogeneously with a polymeric carrier material which is soluble in plant sap, the carrier material being a polyethylene oxide, an N-vinylpyrrolidone/vinyl acetate copolymer, or a mixture of polyvinyl alcohol and glycerol,
- is heated to a temperature of up to 130°C, and
- the resulting mixture is then extracted to give shaped bodies.

3. Method of treating individual plants with systemic herbicides, **characterized in that** solid shaped plant treatment compositions according to Claim 1 are introduced into the vascular system of the plants to be destroyed.

4. Plant treatment compositions according to Claim 1, **characterized in that** they contain between 10% and 90%, preferably between 50% and 75%, of herbicidal active compound and between 90% and 10%, preferably between 50% and 25%, of carrier material.

5. Plant treatment compositions according to Claim 1, **characterized in that** they are in rod-shaped implant form.

## Revendications

1. Formulations solides façonnées pour le traitement de végétaux, **caractérisées en ce que** :
- elles contiennent un herbicide systémique du groupe constitué de bialaphos, glufosinate, glyphosate ou un sel de ces substances, l'herbicide étant réparti de façon homogène dans
- une matière de support, soluble dans la sève des végétaux, qui est un polymère d'oxyde d'éthylène, un copolymère de N-vinylpyrrolidone et d'acétate de vinyle ou un mélange de polymère d'alcool vinylique et de glycérol.

2. Procédé de production de formulations solides façonnées pour le traitement de végétaux suivant la revendication 1, **caractérisé en ce que** :
- l'on mélange un herbicide systémique du groupe constitué de bialaphos, glufosinate, glyphosate ou un sel de ces substances avec une matière polymère de support qui est soluble dans la sève des végétaux, la matière de support étant un polymère d'oxyde d'éthylène, un copolymère de N-vinylpyrrolidone et d'acétate de vinyle ou un mélange d'un polymère d'alcool vinylique et de glycérol,
- l'on chauffe le mélange jusqu'à une température de 130°C et
- l'on transforme ensuite par extrusion le mélange produit en corps façonnés.

3. Procédé de traitement de végétaux individuels avec des herbicides systémiques, **caractérisé en ce qu'**on introduit des formulations solides façonnées pour le traitement de végétaux suivant la revendication 1 dans la région des vaisseaux conducteurs de sève.

4. Formulations pour le traitement de végétaux suivant la revendication 1, **caractérisées en ce qu'**elles contiennent entre 10 % et 90 %, de préférence entre 50 % et 75 % de substance active herbicide ainsi qu'entre 90 % et 10 %, de préférence entre 50 % et 25 %, de matière de support.

5. Formulation pour le traitement de végétaux suivant la revendication 1, **caractérisée en ce qu'**elle se présente comme implant sous forme de bâtonnet.
